# DEMANDE DE BREVET EUROPEEN

(11) **EP 0 718 662 A1**
(43) Date de publication de la demande: **26.06.1996**
(21) Numéro de dépôt: 95402859.3
(22) Date de dépôt: 18.12.1995
(51) Int. Cl.: G02F 1/125

(54) **Dispositif acousto-optique pour filtrage optique**

(30) Priorité: 20.12.1994 FR 9415336
(71) Demandeur: ALCATEL N.V., NL-1077 XX Amsterdam (NL)
(72) Inventeur: Duchet, Christian, F-91460 Marcoussis (FR); Brot, Christian, F-91310 Leuville sur Orge (FR); Di Maggio, Michel, F-78830 Bonnelles (FR)
(74) Mandataire: Pothet, Jean Rémy Emile Ludovic

(57) **Abrégé**

Ce dispositif comporte deux segments successifs d'interaction acoustooptique (SL1 et SL2) séparés par un polariseur intermédiaire (PM) et modifiant chacun la polarisation d'une lumière guidée par ce segment. La modification dépend des fréquences des ondes optiques et acoustiques (WSA1) en interaction. Selon l'invention ces ondes acoustiques sont fournies de manière symétrique à ces deux segments d'interaction à partir d'un même transducteur électrooptique (T).

Une apodisation du spectre de transmission du filtre optique réalisable est obtenue par couplage entre un guide acoustique auxiliaire (GA) incluant le transducteur et un guide acoustique principal (GP) incluant le guide optique.
L'invention s'applique notamment aux systèmes de télécommunications à fibres optiques.

## Description

La présente invention concerne le filtrage optique. Elle trouve notamment application dans les systèmes de télécommunication à fibres optiques qui transmettent simultanément plusieurs informations sous la forme d'un multiplex spectral.

Il est souvent nécessaire d'extraire l'une des composantes d'un tel multiplex, cette composante devant pouvoir être choisie. Pour cela il faut réaliser un filtre optique présentant autant que possible les qualités suivantes :
- fort contraste entre les coefficients de transmission des ondes optiques situées dans la bande passante du filtre et ceux des ondes situées en dehors de cette bande,
- et possibilité de réglage de la fréquence optique centrale de cette bande passante.

Des dispositifs connus utilisent une interaction acoustooptique pour réaliser de tels filtres. Ils seront décrits plus loin. Ils ne présentent malheureusement les qualités ci-dessus qu'à un degré insuffisant.

La présente invention a notamment pour but de permettre de réaliser de manière simple des filtres optiques présentant ces qualités mieux que précédemment.

Dans ce but elle a pour objet un dispositif acousto-optique pour filtrage optique, ce dispositif comportant deux segments successifs d'interaction acoustooptique séparés par un polariseur intermédiaire et modifiant chacun la polarisation d'une lumière guidée par ce segment, cette modification dépendant des fréquences d'ondes optiques et acoustiques en interaction, ce dispositif étant caractérisé par le fait que ces ondes acoustiques sont fournies de manière symétrique à ces deux segments d'interaction à partir d'un même transducteur électroacoustique.

A l'aide des figures schématiques 1 à 3 ci-jointes on va décrire ci-après des dispositifs précédemment connus ainsi que, à simple titre d'exemple, un mode de réalisation de la présente invention.

La figure 1 représente un premier dispositif connu.

La figure 2 représente un deuxième dispositif connu.

La figure 3 représente un dispositif selon l'invention.

Lorsqu'un élément de l'un de ces dispositifs connus assure la même fonction qu'un élément du dispositif selon cette invention, il est désigné par les mêmes chiffres et/ou lettres de référence, avec adjonction d'une ou de deux apostrophes selon qu'il s'agit du premier ou du deuxième dispositif connu. On dira ci-après que deux tels éléments se correspondent.

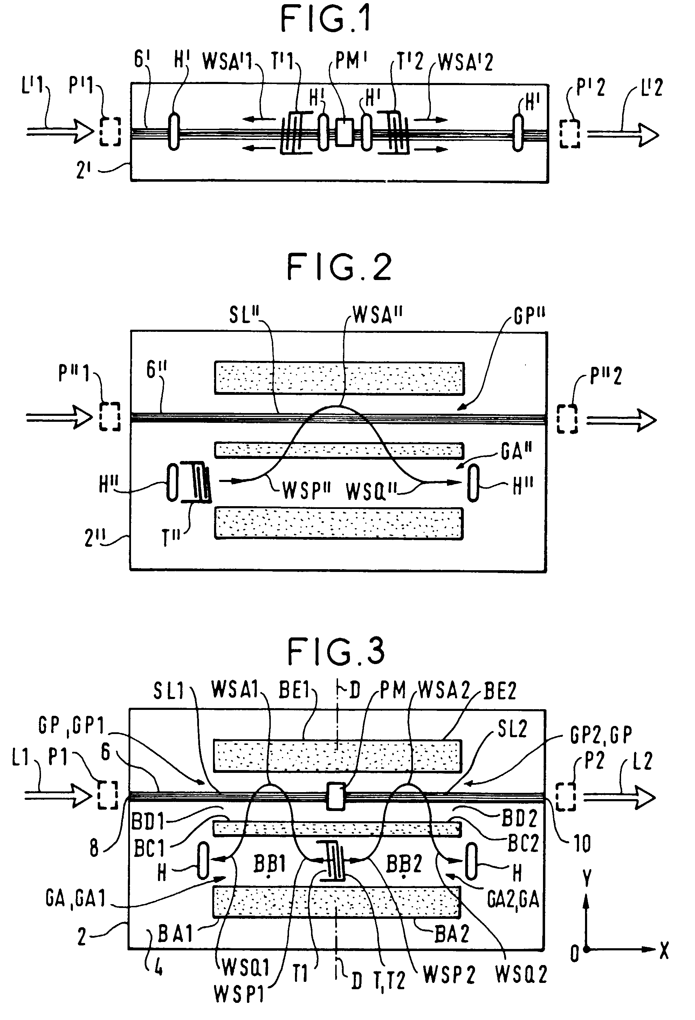

En se référant à la figure 3 on va tout d'abord décrire certains des éléments du dispositif selon cette invention, ces élements étant ceux qui correspondent à des éléments du premier dispositif connu.

Conformément à cette figure le dispositif selon cette invention comporte les éléments suivants :
- Un substrat 2 présentant une face, par exemple horizontale, constituant pour ce dispositif une face supérieure 4. Ce substrat est typiquement constitué d'un matériau acousto-optique tel que le niobate de lithium.
- Un guide optique 6 s'étendant dans cette face supérieure à partir d'une entrée 8 jusqu'à une sortie 10. Ce guide est typiquement réalisé par diffusion d'ions titane dans une couche superficielle du substrat. Il est prévu pour recevoir sur cette entrée une lumière d'entrée L1 constituée d'ondes optiques présentant une même polarisation linéaire d'entrée et pouvant présenter des fréquences optiques différentes, pour guider ces ondes selon au moins une direction et pour restituer l'ensemble de ces ondes à cette sortie sous la forme d'une lumière de sortie L2. La direction selon laquelle ces ondes sont guidées dans chacune des parties de ce guide constitue pour cette partie une direction longitudinale OX, la direction perpendiculaire située dans la face supérieure du substrat constituant une direction transversale OY. Ce guide est de préférence rectiligne de sorte qu'il définit une seule direction longitudinale OX et une seule direction transversale OY. Il présente une birefringence se traduisant par une différence des vitesses de propagation des ondes optiques TE et TM.
- Un ensemble acoustique directionnel intégré au substrat. Cet ensemble reçoit un signal électrique d'alimentation et forme en réponse des ondes acoustiques de surface se propageant dans ce substrat. Ces ondes incluent des ondes acoustiques actives se propageant longitudinalement selon le guide optique.

Le caractère acoustooptique du substrat se traduit par l'existence de coefficients acoustooptiques. Le substrat et l'orientation de sa face supérieure et des guides optiques par rapport au réseau cristallin du substrat donnent à ces coefficients des valeurs qui permettent à une onde acoustique active de provoquer une interaction se traduisant par un couplage entre deux modes optiques guidés TE et TM.

Chaque telle interaction acousto-optique est réalisée entre une onde acoustique présentant une fréquence acoustique fs et une onde optique présentant une fréquence optique Fj . Elle entraîne une modification de la polarisation de cette onde optique, par exemple un échange entre les modes TE et TM, sans modification sensible de sa fréquence optique. Cette modification de polarisation est fonction de cette fréquence optique Fj. Elle présente un maximum lorsque cette fréquence optique présente une relation prédéterminée avec cette fréquence acoustique et plus précisément vérifie une relation Fj = A fs. Dans cette relation A est un facteur défini par la relation A.vs.Δn= vl, vs et vl étant les vitesses des ondes accoustique et de la lumière guidée et Δn étant la différence d'indice de réfraction représentative de la birefringence du guide optique. Il en résulte que les ondes optiques de la lumière de sortie peuvent présenter des polarisations différant les unes des autres et constituant respectivement des polarisations de sortie de ces ondes en correspondance avec leurs fréquences optiques. Un filtre composite peut donc être constitué par l'association du dispositif avec un polariseur P2 polarisant la lumière de sortie L2. Dans l'ensemble acoustique directionnel chaque onde acoustique active est formée par un transducteur intégré au substrat et alimenté par une source électrique à fréquence commandable. Ce transducteur émet des ondes de surface se propageant dans le matériau du substrat au voisinage de sa face supérieure.

Le polariseur de sortie P2 peut par exemple absorber ou réfléchir les ondes optiques qui sont polarisée selon une direction et transmettre celles qui sont polarisées selon une autre direction. Un polariseur d'entrée analogue Pi peut être utilisé pour polariser la lumière d'entrée. Cependant chacun de ces polariseurs peut être omis, le polariseur d'entrée dans le cas où la lumière d'entrée est déjà polarisée, le polariseur de sortie dans le cas où un organe qui utilise la lumière de sortie n'est sensible qu'à une composante polarisée de cette lumière.
- Enfin un polariseur intermédiaire PM disposé en un point intermédiaire du guide optique 6 et de préférence intégré au substrat. Ce polariseur délimite sur ce guide un premier et un deuxième segments d'interaction SL1 et SL2 présentant une symétrie mutuelle, ces deux segments étant parcourus en série par lesdites ondes optiques. Ces deux segments sont parcourus respectivement par une première et une deuxième ondes accoustiques actives WSA1 et WSA2 de sorte que ce dispositif constitue un premier filtre élémentaire pour une lumière d'entrée polarisée linéairement et qu'un deuxième filtre élémentaire peut être constitué par ladite association du dispositif avec un polariseur de sortie P2. Ces deux filtres élémentaires constituent alors respectivement deux étages successifs dudit filtre composite tout en présentant respectivement deux fréquences centrales commandées par des fréquences acoustiques de ces deux ondes acoustiques actives. La mise en série de ces deux étages permet d'augmenter le contraste du filtre composite.

Un dispositif de ce genre est connu par un article "Reduced sidelobe integrated acousto-optic filter with birefringence apodization" L.B Aronson, G. Rankin, W.R. Trutna, Jr., and D.W. Dolfi (October 15, 1993/ Vol.18, No.20/OPTICS LETTERS, p.1721 - 1723.

Il est schématisé sur la figure 1 ci-jointe. Son ensemble acoustique directionnel comporte plusieurs transducteurs électroacoustiques tels que T'1 et T'2 sur la figure 1. Ces transducteurs engendrent directement des ondes acoustiques actives telles que WSA'1 et WSA'2. Ces ondes se propagent dans l'axe du guide optique 6'.

Ce dispositif présente l'inconvénient de n'avoir qu'un faible contraste si les guides optiques sont identiques et uniformes. Si les deux guides sont différents, cas présenté dans l'article, il est difficile de faire coïncider les fréquences centrales des deux étages du filtre composite. Or cette coïncidence est nécessaire pour réaliser un filtre efficace dans un système de télécomunication à fibres optiques avec multiplexage spectral.

Selon la présente invention un transducteur électroacoustique T inclus dans l'ensemble acoustique directionnel et alimenté par le signal électrique d'alimentation engendre une puissance acoustique suffisante pour constituer à la fois les première et deuxième ondes acoustiques actives WSA1 et WSA2, cet ensemble formant ces première et deuxième ondes accoustiques actives par une orientation et une répartition de cette puissance acoustique. Cette orientation et cette répartition présentent la même symétrie mutuelle que les premier et deuxième segments d'interaction. Cette symétrie assure une égalité automatique des fréquences centrales des deux filtres élémentaires pour des guides optiques uniformes.

Cette symétrie est par exemple réalisée par rapport à un axe transversal D ou, plus précisément, si l'on considère les épaisseurs des composants au-dessous de la face supérieure du substrat, par rapport au plan vertical défini par cet axe.

La formation des ondes accoustiques actives pourrait être réalisée de diverses manières :

Elle pourrait par exemple être réalisée à partir de deux faces émettrices opposées d'un transducteur disposé au milieu du guide optique, entre deux éléments identiques d'un polariseur intermédiaire composite. Elle pourrait aussi être réalisée à partir des deux faces émettrices opposées d'un transducteur placé sur l'axe de symétrie à petite distance du guide optique. Les deux faisceaux d'ondes acoustiques seraient dirigés respectivement vers les deux segments d'interaction par des moyens de distribution acoustique distincts du transducteur. De tels moyens comporteraient des guides acoustiques incurvés formés dans la face supérieure du substrat.

De préférence selon la présente invention des moyens de distribution accoustique sont choisis de manière à réaliser une apodisation du spectre de transmission du filtre composite, c'est-à-dire la diminution ou la suppression de lobes secondaires de part et d'autre d'un lobe principal définissant la bande passante de ce filtre.

Une telle apodisation peut être obtenue par une répartition longitudinale appropriée de l'intensité accoustique dans un segment d'interaction. Cette répartition peut être définie par une loi de variation de l'intensité accoustique en fonction d'une abscisse mesurée le long de ce segment. Cette loi est représentée par une arche de sinus-carré pour la réalisation la plus simple utilisant un coupleur acoustique uniforme tel que celui qui sera décrit ci-après. Si on accepte que la réalisation du coupleur soit plus complexe, des lois Gaussienne ou de Hamming sont préférables.

L'efficacité de l'apodisation est définie par un rapport d'apodisation qui est le rapport de la puissance optique dans les lobes secondaires à la même grandeur dans le lobe principal.

De préférence des bandes longitudinales sont formées dans la face supérieure 4 du substrat 2 pour les segments d'interaction SL1 et SL2, ces bandes ayant des vitesses acoustiques caractéristiques respectives qui sont les vitesses auxquelles les ondes acoustiques de surface se propagent respectivement dans ces bandes. Ces bandes incluent trois bandes de renvoi acoustique et deux bandes de propagation accoustique associées à chaque segment d'interaction SL1 ou SL2, les bandes de renvoi acoustique ayant des vitesses acoustiques caractéristiques plus grandes que les bandes de propagation acoustiques adjacentes. Ces bandes se succédent selon la direction transversale dans l'ordre suivant :
- une bande de renvoi auxiliaire BA1 ou BA2,
- une bande de propagation auxiliaire BB1 ou BB2,
- une bande de renvoi intermédiaire BC1 ou BC2 constituant avec la bande de renvoi auxiliaire et la bande de propagation auxiliaire un segment de guide acoustique auxiliaire GA1 ou GA2 tendant à confiner les ondes acoustiques dans la bande de propagation auxiliaire BB1, ce segment étant un premier ou un deuxième segment selon que ces bandes sont associées au premier ou au deuxième segment d'interaction, respectivement,
- une bande de propagation principale BD1 ou BD2,
- et une bande de renvoi principale BE1 ou BE2 constituant avec la bande de renvoi intermédiaire et la bande de propagation principale un segment de guide acoustique principal GP1 ou GP2 tendant à confiner les ondes acoustiques dans la bande de propagation principale, ce segment étant un premier ou un deuxième segment selon que ces bandes sont associées au premier ou au deuxième segment d'interaction, respectivement.

Les bandes de renvoi sont typiquement réalisées par diffusion superficielle d'ions titane dans le substrat de niobate de lithium. La largeur de la bande de renvoi intermédiaire BC1 ou BC2 et son écart de vitesse acoustique caractéristique par rapport aux bandes de propagation auxiliaire et principale sont suffisamment faibles pour réaliser un couplage entre les segments de guides acoustique s auxiliaire et principal. Ce couplage a une longueur caractéristique de couplage acoustique . Il est tel qu'une onde acoustique guidée à 100 % par l'un de ces segments de guides passe progressivement dans l'autre de ces segments de guides et se retrouve guidée à 100 % dans ce dernier après avoir parcouru cette longueur caractéristique de couplage.

Le premier et le deuxième segments d'interaction SL1 et SL2 s'étendent dans les axes des premier et deuxième segments de guide acoustique principal GP1 et GP2, respectivement. Le transducteur T injecte une première et une deuxième ondes acoustiques primaires WSP1 et WSP2 dans les premier et deuxième segments de guide acoustique auxiliaire GA1 et GA2 en un premier et deuxième points d'injection primaire respectivement. Ces points sont par exemple constitués par le transducteur T lui-même. Le couplage entre les premier ou deuxième segments de guide auxiliaire GA1 ou GA2 et le premier ou deuxième segment de guide principal GP1 ou GP2 est réalisé sur une longueur de couplage acoustique effectif sensiblement égale au double de ladite longueur caractéristique de couplage acoustique à partir du premier ou deuxième points d'injection primaire, respectivement. Il en résulte que ce couplage transfère d'abord progressivement la puissance de la première ou deuxième onde acoustique primaire WSP1 ou WSP2 dans le premier ou deuxième segment de guide acoustique principal pour y faire apparaître la première ou deuxième onde acoustique active WSA1 ou WSA2 puis transfère progressivement en retour cette puissance dans le premier ou deuxième segment de guide acoustique auxiliaire pour faire disparaître cette première ou deuxième onde acoustique active, respectivement. Le retour de cette puissance dans les segments de guide auxiliaire y donne naissance à une onde acoustique WSQ1 ou WSQ2, respectivement. Sur les figures 2 et 3 de tels transferts de puissance acoustique sont représentés par une ligne onduleuse qui indique approximativement, sur la longueur des segments de guide, l'évolution de la position du barycentre du champ acoustique.

En pratique la présence du guide optique 6 perturbe le guide acoustique GP et détruit le synchronisme entre les guides GP et GA. Pour rétablir ce synchronisme un guide optique semblable au guide 6 est introduit dans GA qui devient alors identique à GP. Ce guide optique supplémentaire est dit inerte parce qu'il ne guide aucune onde lumineuse. Pour plus de clarté il n'est pas représenté sur les figures 2 et 3.

La loi de répartition longitudinale ainsi obtenue pour l'intensité de l'onde acoustique active réalise une apodisation.

Un filtre connu a réalisé une apodisation de la manière qui vient d'être décrite sauf qu'il comportait un seul segment d'interaction, les guides acoustique s principal et auxiliaire ne comportant alors eux aussi chacun qu'un seul segment. Il est représenté à la figure 2.

Il est décrit dans un article : "Sidelobe suppression in an acousto-optic filter with a raised-cosine interaction strength" D.A. Smith and J.J. Johnson Appl. Phys. Lett.61 (9), 31 August 1992 p 1025-1027.

Il permettait d'obtenir un rapport d'apodisation de 17.5 dB.

Le filtre réalisable à l'aide du dispositif selon la présente invention réalise deux apodisations en série et permet ainsi de doubler le rapport d'apodisation qui passe à 35 dB pour des coupleurs acoustiques uniformes.

De préférence le transducteur T est disposé entre les premier et deuxième segments de guide acoustique auxiliaire GA1 et GA2 dans un guide acoustique auxiliaire GA incluant ces deux segments. Il émet alors les première et deuxième ondes acoustiques primaire par une première et une deuxième faces émettrices T1 et T2, un guide même acoustique principal GP incluant lesdits premier et deuxième segments de guide acoustique principal GP1 et GP2.

Le dispositif comporte en outre un absorbeur acoustique 4 à chaque extrémité du guide acoustique H auxiliaire pour absorber la puissance acoustique qui a été transférée en retour dans ce guide à partir du guide acoustique principal.

De préférence les guides optiques sont rectilignes, lesdites première et deuxième faces émettrices étant deux faces opposées du transducteur.

## Revendications

1. Dispositif acousto-optique pour filtrage optique, ce dispositif comportant deux segments successifs d'interaction acoustooptique (SL1 et SL2) séparés par un polariseur intermédiaire (PM) et modifiant chacun la polarisation d'une lumière guidée par ce segment, cette modification dépendant des fréquences d'ondes optiques et acoustiques (WSA1) en interaction, ce dispositif étant caractérisé par le fait que ces ondes acoustiques sont fournies de manière symétrique à ces deux segments d'interaction à partir d'un même transducteur électroacoustique (T).

2. Dispositif selon la revendication 1, ce dispositif comportant :
- un substrat (2) présentant une face, par exemple horizontale, constituant pour ce dispositif une face supérieure (4),
- un guide optique (6) s'étendant dans cette face supérieure à partir d'une entrée (8) jusqu'à une sortie (10) pour recevoir sur cette entrée une lumière d'entrée (L1) constituée d'ondes optiques présentant une même polarisation linéaire d'entrée et pouvant présenter des fréquences optiques différentes, pour guider ces ondes selon au moins une direction et pour restituer l'ensemble de ces ondes à cette sortie sous la forme d'une lumière de sortie (L2), la direction selon laquelle ces ondes sont guidées dans chacune des parties de ce guide constituant pour cette partie une direction longitudinale (OX), la direction perpendiculaire située dans la face supérieure du substrat constituant une direction transversale (OY), ce guide optique présentant une biréfringence,
- un ensemble acoustique directionnel intégré audit substrat, cet ensemble recevant un signal électrique d'alimentation et formant en réponse des ondes acoustiques se propageant dans ce substrat et présentant des fréquences acoustiques, ces ondes incluant des ondes acoustiques actives se propageant longitudinalement selon ledit guide optique de manière à permettre des interactions acousto-optique entre ces ondes acoustiques actives et les ondes optiques se propageant dans ce guide,
chaque telle interaction étant réalisée entre une onde acoustique présentant une fréquence acoustique fs et une onde optique présentant une fréquence optique Fj, cette interaction entraînant une modification de la polarisation de cette onde optique, sans modification sensible de sa fréquence optique, cette modification de polarisation étant fonction de cette fréquence optique Fj et présentant un maximum lorsque cette fréquence optique présente une relation prédéterminée avec cette fréquence acoustique , de sorte que les ondes optiques de la lumière de sortie peuvent présenter des polarisations différant les unes des autres et constituant respectivement des polarisations de sortie de ces ondes en correspondance avec leurs fréquences optiques et de sorte qu'un filtre composite peut être constitué par l'association dudit dispositif avec un polariseur P2 polarisant la lumière de sortie L2,
- et un polariseur intermédiaire (PM) disposé en un point intermédiaire dudit guide optique (6) et délimitant sur ce dernier un premier (SL1) et un deuxième (SL2) segments d'interaction présentant une symétrie mutuelle, ces deux segments étant parcourus en série par lesdites ondes optiques, ces segments étant parcourus respectivement par une première et une deuxième dites ondes acoustiques actives (WSA1 et WSA2) de sorte que ce dispositif constitue un premier filtre élémentaire pour une lumière d'entrée polarisée linéairement et qu'un deuxième filtre élémentaire peut être constitué par ladite association dudit dispositif avec un polariseur de sortie (P2),
ces deux filtres élémentaires constituant alors respectivement deux étages successifs dudit filtre composite tout en présentant respectivement deux fréquences centrales commandées par des fréquences acoustiques de ces deux ondes acoustiques actives,
ledit dispositif étant caractérisé par le fait qu'un transducteur électroacoustique (T) inclus dans ledit ensemble acoustique directionnel et alimenté par ledit signal électrique d'alimentation engendre une puissance acoustique suffisante pour constituer à la fois lesdites première et deuxième ondes acoustiques actives (WSA1) et (WSA2), cet ensemble formant ces première et deuxième ondes acoustiques actives une répartition de cette puissance acoustique, cette répartition présentant la même symétrie mutuelle que lesdits premier et deuxième segments d'interaction.

3. Dispositif selon la revendication 2 caractérisé par le fait que des bandes longitudinales sont formées dans la face supérieure (4) du substrat (2) pour les segments d'interaction (SL1) et (SL2), ces bandes ayant des vitesses acoustiques caractéristiques respectives qui sont les vitesses auxquelles les ondes acoustiques se propagent respectivement dans ces bandes, ces bandes incluant trois bandes de renvoi acoustique et deux bandes de propagation acoustique associées à chaque segment d'interaction (SL1) ou (SL2), les bandes de renvoi acoustique ayant des vitesses acoustiques caractéristiques plus grandes que les bandes de propagation acoustiques adjacentes, ces bandes se succédant selon la direction transversale dans l'ordre suivant :
- une bande de renvoi auxiliaire (BA1) ou (BA2),
- une bande de propagation auxiliaire (BB1) ou (BB2),
- une bande de renvoi intermédiaire (BC1) ou (BC2) constituant avec la bande de renvoi auxiliaire et la bande de propagation auxiliaire un segment de guide acoustique auxiliaire (GA1) ou (GA2) tendant à confiner les ondes acoustiques dans la bande de propagation auxiliaire (BB1), ce segment étant un premier ou un deuxième segment selon que ces bandes sont associées au premier ou au deuxième segment d'interaction, respectivement,
- une bande de propagation principale (BD1) ou (BD2),
- et une bande de renvoi principale (BE1) ou (BE2) constituant avec la bande de renvoi intermédiaire et la bande de propagation principale un segment de guide acoustique principal (GP1) ou (GP2) tendant à confiner les ondes acoustiques dans la bande de propagation principale, ce segment étant un premier ou un deuxième segment selon que ces bandes sont associées au premier ou au deuxième segment d'interaction, respectivement,
la largeur de la bande de renvoi intermédiaire (BC1) ou (BC2) et son écart de vitesse acoustique caractéristique par rapport aux bandes de propagation auxiliaire et principale étant suffisamment faibles pour réaliser un couplage entre les segments de guides acoustiques auxiliaire et principal, ce couplage ayant une longueur caractéristique de couplage acoustique et étant tel qu'une onde acoustique guidée à 100 % par l'un de ces segments de guides passe progressivement dans l'autre de ces segments de guides et se retrouve guidée à 100 % dans ce dernier après avoir parcouru cette longueur caractéristique de couplage,
- le premier et le deuxième segments d'interaction (SL1) et (SL2) s'étendant dans les axes des premier et deuxième segments de guide acoustique principal (GP1) et (GP2), respectivement,
- ledit transducteur (T) injectant une première et une deuxième ondes acoustiques primaires (WSP1) et (WSP2) dans les premier et deuxième segments de guide acoustique auxiliaire (GA1) et (GA2) en un premier et deuxième points d'injection primaire respectivement, ledit couplage entre les premier ou deuxième segments de guide auxiliaire (GA1) ou (GA2) et le premier ou deuxième segment de guide principal (GP1) ou (GP2) étant réalisé sur une longueur de couplage acoustique effectif sensiblement égale au double de ladite longueur caractéristique de couplage acoustique à partir du premier ou deuxième points d'injection primaire, respectivement, de manière que ce couplage transfère d'abord progressivement la puissance de la première ou deuxième onde acoustique primaire (WSP1) ou (WSP2) dans le premier ou deuxième segment de guide acoustique principal pour y faire apparaître la première ou deuxième onde acoustique active (WSA1) ou (WSA2) puis transfère progressivement en retour cette puissance dans le premier ou deuxième segment de guide acoustique auxiliaire pour faire disparaître cette première ou deuxième onde acoustique active, respectivement.

4. Dispositif selon la revendication 3 caractérisé par le fait que ledit transducteur (T) est disposé entre les premier et deuxième segments de guide acoustique auxiliaire (GA1 et GA2) dans un guide acoustique auxiliaire (GA) incluant ces deux segments.
ce transducteur émettant les première et deuxième ondes acoustiques primaire par une première et une deuxième faces émettrices (T1 et T2), un guide acoustique principal (GP) incluant lesdits premier et deuxième segments de guide acoustique principal (GP1 et GP2).

5. Dispositif selon la revendication 4, ce dispositif comportant en outre un absorbeur acoustique (H) à chaque extrémité du guide acoustique auxiliaire (GA) pour absorber la puissance acoustique qui a été transférée en retour dans ce guide à partir du guide acoustique principal (GP).

6. Dispositif selon la revendication 4 caractérisé par le fait que ledit guide optique (6) est rectiligne, lesdites première et deuxième faces émettrices étant deux faces opposées dudit transducteur (T).
